# EUROPÄISCHE PATENTSCHRIFT

(11) **EP 1 121 558 B1**
(45) Veröffentlichungstag und Bekanntmachung des Hinweises auf die Patenterteilung: **02.01.2004**
(21) Anmeldenummer: 99957881.8
(22) Anmeldetag: 11.10.1999
(51) Int. Cl.: F21V 8/00, A61C 19/00

(54) **LICHTLEITER MIT HANDSCHALTER**
WAVEGUIDE WITH HAND SWITCH
GUIDE OPTIQUE A COMMUTATEUR MANUEL

(30) Priorität: 09.10.1998 DE 19846580; 27.10.1998 DE 19849569; 06.11.1998 DE 19851365; 30.04.1999 DE 19919817
(43) Veröffentlichungstag der Anmeldung: 08.08.2001
(73) Patentinhaber: Nath, Günther, 82041 Deisenhofen (DE)
(72) Erfinder: Nath, Günther, 82041 Deisenhofen (DE)
(74) Vertreter: Eisenführ, Speiser & Partner
(86) Internationale Anmeldenummer: PCT/DE1999/003266
(87) Internationale Veröffentlichungsnummer: WO 2000/022343

(56) Entgegenhaltungen:
- EP-A- 0 046 939
- DE-A- 4 014 363

## Beschreibung

Die Erfindung betrifft einen Lichtleiter gemäß dem Oberbegriff von Anspruch 1.

Sowohl in der Industrie als auch in der Zahnheilkunde sind Strahlungspolymerisationsgeräte in Gestalt von optischen Beleuchtungsanordnungen mit angekoppelten flexiblen Lichtleitern schon länger bekannt; siehe hierzu die deutschen Offenlegungsschriften DE-A1 30 09 171.5 und DE-A1 40 14 363.5, sowie das Gebrauchsmuster G 94 00 445.5.

Die für die Strahlungspolymerisationsgeräte verwendeten Strahlungsquellen sind entweder Wolfram-Halogenlampen, Xenon-Hochdrucklampen oder Hg-Mitteldruckoder Höchstdrucklampen. In der Zahnheilkunde wird für die Polymerisation von Füllungsmaterialien (sogenannte Kompositmaterialien) überwiegend Lichtstrahlung im blauen Spektralbereich, d.h. im Bereich 400nm < λ < 500nm verwendet, während zum Aushärten von industriellen Klebern mit Strahlung meistens UV-Strahlung im Wellenlängenbereich 250nm < λ < 400nm zum Einsatz gelangt. Als flexible Lichtleiter können an die Strahlungsquelle sowohl die konventionellen Glasfaserbündel oder Bündel aus Plastikfasern, aber auch die seit etwa 20 Jahren bekannten Flüssigkeitslichtleiter angekoppelt werden. Letztere können im Gegensatz zu den Glasfaserbündeln sowohl Blaulicht als auch UV-Strahlung mit hohem Wirkungsgrad übertragen.

Die Applizierung der Strahlung auf das Monomere wird fast immer zeitlich über einen einstellbaren Timer gesteuert, wobei entweder die Lampe für eine definierte Zeit eingeschaltet wird oder, im Falle einer kontinuierlich betriebenen Strahlungsquelle, wie z.B. einer Hg-Lampe, der Lichtstrom durch einen vom Timer gesteuerten Shutter (Lichtschranke) für eine definierte Zeit geöffnet wird. Die Auslösung der zu applizierenden Strahlungsdosis erfolgt fast immer entweder über einen Handschalter oder über einen Fußschalter, also einen galvanisch funktionierenden Schließer. Im Falle von Faserbündellichtleitern bei Verwendung in der Zahnarztpraxis sind sowohl Handschalter am Lichtaustrittsende des Lichtleiters als auch Fußschalter im Gebrauch. Bei Einsatz von Flüssigkeitslichtleitern in der Zahnarztpraxis benutzt man ausschließlich Fußschalter, weil die Flüssigkeitslichtleiter infolge ihrer geringeren Flexibilität und ihrer geringen axialen Verdrehbarkeit alle ein Handstück besitzen, welches als drehbares Rohr ausgebildet ist. Somit ist die Verwendung eines galvanisch funktionierenden Handschalters an diesem drehbaren Rohr technisch aufwendig und kompliziert, wenn der Handschalter in allen Rotationslagen des Drehrohres betätigbar sein soll.

Die Erfindung stellt sich die Aufgabe, einen Lichtleiter mit Handschalter zur Verfügung zu stellen, der die genannten Erfordernisse erfüllt und insbesondere leicht und ergonomisch vorteilhaft zu bedienen ist.

Diese Aufgabe wird gelöst mit einem Lichtleiter gemäß Anspruch 1. Weiterbildungen des erfindungsgemäßen Handschalters sind in den Unteransprüchen beschrieben.

Der erfindungsgemäße Lichleiter mit Handschalter eignet sich insbesondere für die Verwendung bei Flüssigkeitslichtleitern in der Zahnarztpraxis zum Aushärten von Füllungen. Aber auch für technische Industrieanwendungen des Flüssigkeitslichtleiters zum Aushärten von Klebern, bei denen der Lichtleiter von Hand geführt wird (z.B. beim "Löten" von Platinen mit optischen Klebern), hat er Vorteile. Die neuen Handschalter können nicht nur für Flüssigkeitslichtleitern verwendet werden, sondern auch für aus Faserbündeln aufgebauten Lichtleitern, obwohl sie für Flüssigkeitslichtleiter besonders vorteilhaft sind.

Die Erfindung wird nachstehend anhand von in den Zeichnungen dargestellten bevorzugten Ausführungsformen näher beschrieben; es zeigen:
- Fig. 1:: das Lichtaustrittsende eines Flüssiglichtleiters gemäß dem Stand der Technik;
- Fig. 2:: einen erfindungsgemäßen Flüssiglichtleiter mit einem Handschalter, der eine Spiralfeder als Rückstelleinrichtung aufweist;
- Fig. 3:: einen erfindungsgemäßen Flüssiglichtleiter mit einem Handschalter, der zwei Magneten aufweist;
- Fig. 3a:: die Ausgangs- und die Schaltposition der Magneten des in Fig. 3 gezeigten Handschalters, wenn dieser ein magnetischer elastischer Schalter ist;
- Fig. 3b:: die Ausgangs- und die Schaltposition der Magneten des in Fig. 3 gezeigten Handschalters, wenn dieser ein magnetischer Kippschalter ist;
- Fig. 4:: einen erfindungsgemäßen Flüssiglichtleiter mit Handschalter, der eine Anordnung mit drei Magneten aufweist;
- Fig. 4a:: die Ausgangs- und die Schaltposition der Magneten des in Fig. 4 gezeigten Handschalters;
- Fig. 5:: eine Modifikation des Handschalters des Flüssiglichtleiters von Fig.4.

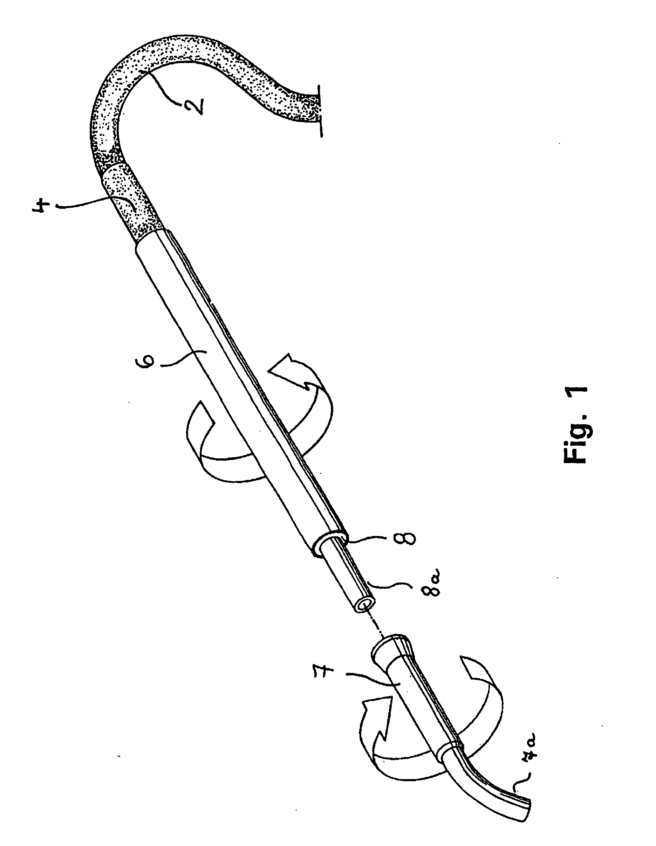

In Fig. 1 ist das Lichtaustrittsende eines Flüssigkeitslichtleiters in der üblichen und bekannten Dentalausführung dargestellt. Der Flüssigkeitslichtleiter 2 ist aufgebaut aus einem Plastikschlauch aus einem Kohlenstoff/Fluor-Polymer, der mit einer höher brechenden Flüssigkeit gefüllt ist, wie z.B. Triäthylenglykol mit etwas Wasser. Der Schlauch aus dem niedriger brechenden C/F-Polymer befindet sich seinerseits aus Gründen der mechanischen Armierung im Innern eines enganliegenden, flexiblen Metall-Wickelschlauchs (ähnlich einem Brauseschlauch), der seinerseits mit PVC oder Silikon überschrumpft ist. Der Lichtleiter endet am Lichtaustritt in einem starren, länglichen Endteil 4, über welches ein Rohr 6 montiert ist, welches längs der Lichtleiterachse frei drehbar gelagert ist. Am Ende des Rohres 6 befindet sich ein gekrümmtes Applikationsteil 7 mit einem Applikatorfenster 7a. Letzteres wird über das Lichtleiterende 8a gesteckt, wobei die mechanische Fixierung über einen Magnetring 8 besorgt wird. Das Applikationsteil 7 läßt sich mithin ebenfalls längs der Lichtleiterachse und relativ zum Rohr 6 verdrehen, wie es in Fig. 1 angedeutet ist.

Dreht man das Rohr 6, so rotiert das gekrümmte Applikatorfenster 7a mit, was dem Zahnarzt, der das Rohr 6 ähnlich wie einen Bleistift hält, die Applikation der Strahlung in situ erleichtert. Die Drehbarkeit des Rohrs 6 ist gerade beim Flüssigkeitslichtleiter so wichtig, weil dieser Lichtleiter merklich unflexibler ist als z.B. Glasfaserbündel-Lichtleiter und auch im Gegensatz zu diesen in sich nur mit großem Widerstand verdreht werden kann. Deshalb haben Lichtleiter aus Glasfaserbündeln auch immer ein starres, nicht relativ zur Lichtleiterachse rotierbares Handstück mit einem mit dem Handstück fest verbundenem, gekrümmtem Applikatorfenster. Dies erleichtert bei Glasfaserbündel-Lichtleitern die Anbringung eines galvanisch funktionierenden Handschalters, wobei sich am Handstück des Lichtleiters ein einfacher elektrischer Kontaktschalter befindet, von dem aus zwei dünne Litzen längs des Lichtleiters zum Lampengehäuse zurückgeführt werden.

Generell gilt, daß in der Zahnarztpraxis beim Polymerisieren mit Lichtleitergeräten dem Handschalter am Lichtleiterende gegenüber einem Fußschalter der Vorzug gegeben wird, weil für den Zahnarzt die Arbeit mit dem Handschalter wesentlich angenehmer ist. Um auch das Arbeiten mit dem Flüssigkeitslichtleiter für den Zahnarzt angenehmer zu gestalten, wird der lästige Fußschalter beim Polymerisationsgerät eliminiert und die nachfolgende erfindungsgemäße Lösung eines Handschalters für Flüssigkeitslichtleiter beschrieben, insbesondere für solche mit einem drehbaren Rohr 6.

Der erfindungsgemäße Lichtleiter weist einen Handschalter zur Steuerung des Strahlungsflusses einer optischen Beleuchtungsanordnung auf, der wie folgt aufgebaut ist.

Im Inneren des des drehbaren Rohres befindet sich ein magnetisch aktivierbarer Schalter - bevorzugt ein Reedschalter oder Hallschalter - und desweiteren mindestens ein ringförmiger Magnet, welcher durch Fingerdruck entlang dem drehbaren Rohr bewegt werden kann, so daß der Abstand zwischen magnetisch aktivierbarem Schalter und ringförmigem Magneten verkleinert oder vergrößert wird und damit der magnetisch aktivierbare Schalter je nach Stärke des an seinem Ort vorliegenden magnetischen Feldes geschlossen oder geöffnet werden kann.

Gemäß einer ersten bevorzugten Ausführungsform ist der ringförmige Magnet an eine elastische Rückstellkraft gekoppelt, so daß er sich nach Wegfall des Fingerdrucks von selbst wieder in seine Ausgangsposition zurückbewegt. Die Rückstellkraft kann durch eine Spiralfeder erzeugt werden.

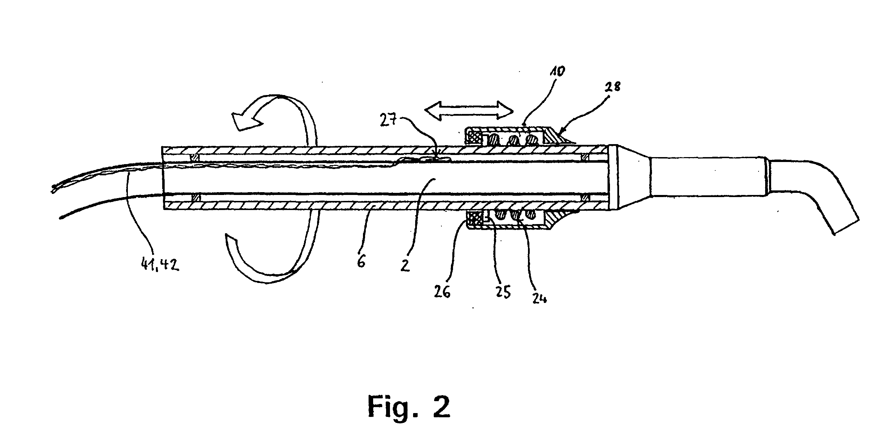

Eine solche Ausführungsform ist in Fig. 2 gezeigt. Diese Darstellung verdeutlicht die Anordnung eines magnetisch aktivierbaren Schalters 27 am Lichtaustrittsende eines Flüssigkeitslichtleiters mit drehbarem Rohr 6, so wie er in der Zahnarztpraxis zum Härten von Füllungen verwendet wird.

Der Flüssigkeitslichtleiter 2 mündet am Lichtaustrittsende in das drehbare Rohr 6, welches aus Aluminium, Kunststoff, Edelstahl oder einem sonstigen nichtmagnetisierbarem Material besteht, wobei Aluminium bevorzugt ist. Zwischen dem Lichtleiter 2 und dem drehbaren Rohr 6 befindet sich ein Reedschalter 27 (auch Reed-Kontakt genannt), welcher auf dem Außenmantel des Lichtleiters 2 mit geringem Abstand zur Innenfläche des rotierbaren Rohrs 6 fest fixiert ist.

Vom Reedschalter 27 führen zwei dünne Litzen 41, 42 in das Innere des Lichtleiters 2 und werden dort im Raum zwischen dessen flüssigkeitsgefülltem Schlauch aus Kohlenstoff/Flour-Polymer und dessen äußerem Schutzschlauch zum Lichteintrittsende des Lichtleiters geführt, wo sie aus dem Lichtleiter herausgeführt werden und mit Schrumpfschlauch, Zugentlastung und elektrischem Stecker, z. B. in Form eines Klinkensteckers, armiert werden. Der Klinkenstecker erlaubt den Kontakt mit der Buchse eines elektrischen Lichtkastens herzustellen, welcher ursprünglich für den Fußschalter vorgesehen war.

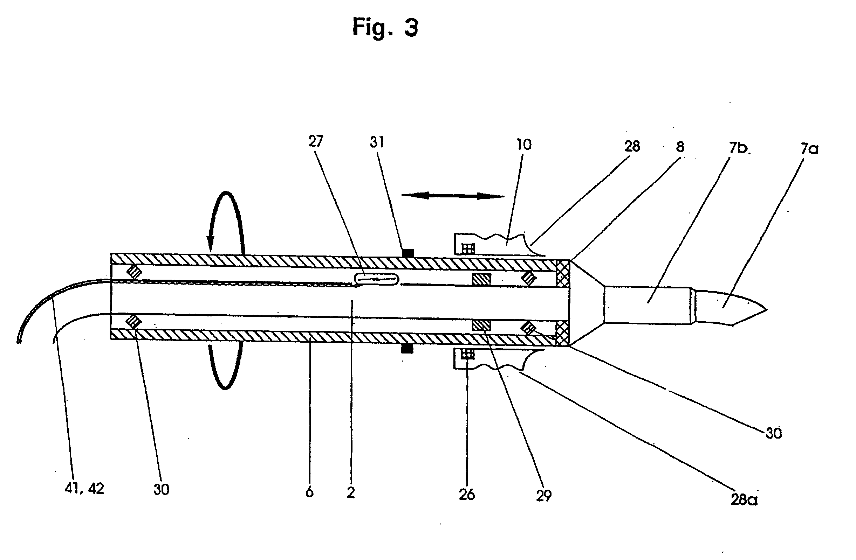

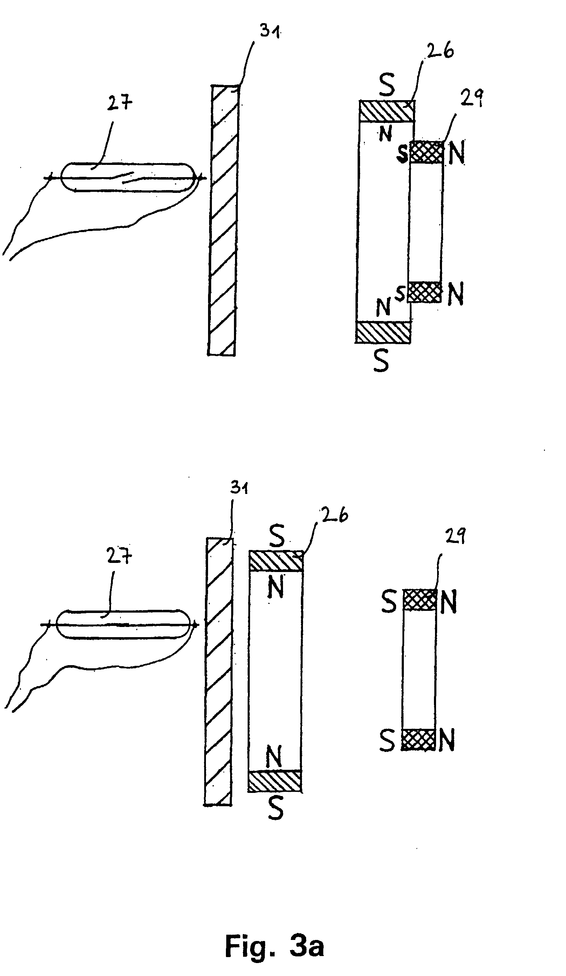

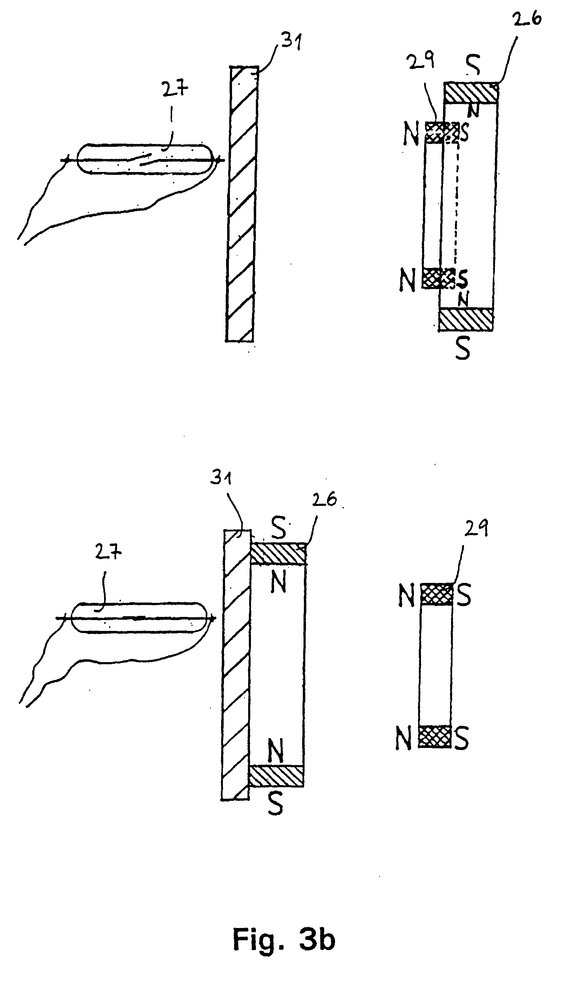

Das Triggerteil des Schalters ist als verschiebbare, auf dem Rohr 6 eng anliegende Hülse 10 ausgebildet, in deren Innerem sich ein ringförmiger Permanentmagnet 26 sowie eine Spiralfeder 24 befinden. Die Hülse 10 trägt außerdem noch lichtaustrittsseitig eine rotationssymmetrische Fingergriffmulde 28 und wahlweise eine auf dem äußeren Umfang umlaufende Riffelung 28a (dargestellt in Fig. 3).

Der Magnetring 26 und die Spiralfeder 24 werden durch einen mit dem Rohr 6 fest verbundenen Stopper-Ring 25 getrennt. Auf diese Weise entsteht die elastische Rückstellkraft für die verschiebbaren Hülse 10, wenn durch dessen Loslassen der Reedschalter 27 wieder geöffnet werden soll.

Beim Handschalter gemäß Fig. 2 bleibt die volle Drehbarkeit des Rohres 6 erhalten, und er kann in jeder Drehlage des Rohres 6 in ergonomisch befriedigender Weise betätigt werden. Das von den meisten Zahnärzten bevorzugte bleistiftähnliche Handstück kann auf diese Weise mit Handschalter ausgerüstet und angeboten werden. Dies gilt insbesondere bei Verwendung von Flüssigkeitslichtleitern mit drehbarem Rohr 6.

Gemäß einer zweiten bevorzugten Ausführungsform des erfindungsgemäßen Lichtleiters ist der ringförmige bewegliche Magnet an eine magnetische Rückstellkraft gekoppelt, so daß er sich nach Wegfall des Fingerdrucks von selbst wieder in seine Ausgangsposition zurückbewegt und somit auch eine definierte Null-Lage besitzt. Die magnetische Rückstellkraft wird durch einen zweiten, jedoch festsitzenden ringförmigen Magneten erzeugt.

Eine solche Ausführungsform ist in Fig. 3 gezeigt. Soweit Fig. 3 identisch mit Fig. 2 ist, wird hier auf eine erneute Beschreibung verzichtet und auf die dortigen Erläuterungen verwiesen; für gleiche Teile werden gleiche Bezugszeichen verwendet.

Das Triggerteil des Schalters - d.h. die Hülse 10 - ist vorzugsweise aus Kunststoff hergestellt, welcher auf dem vorzugsweise aus Aluminium bestehenden Rohr 6 mit eloxierter Oberfläche leicht gleiten kann. Der kreisrunde Innendurchmesser der Hülse 10 einschließlich dem integriertem Ringmagneten 26 ist stufenlos und glatt ausgebildet, so daß die Hülse 10 nach Abnahme des bei dieser Ausführungsform nur magnetisch gehaltenen, gekrümmten Lichtaustrittsfensters 7 (siehe auch Fig. 1) leicht vom Rohr ganz abgezogen werden kann.

Anders als bei Fig. 2 wird bei Fig. 3 die Fixierung der verschiebaren Hülse 10 auf dem Rohr 6 des Lichtleiters nicht durch eine Spiralfeder, sondern durch einen zweiten ringförmigen Permanentmagneten 29 bewirkt, der einen kleineren Außendurchmesser hat als der erste ringförmige Permanentmagnet 26 und im Inneren des drehbaren Rohres 6 konzentrisch zum ersten Magneten 26 und fest auf dem starren Endteil des Lichtleiters 2 montiert ist. Der Außendurchmesser des festsitzenden ringförmigen Magneten 29 ist kleiner als der Innendurchmesser des Rohres 6, so daß das Rohr 6 weiterhin frei auf seiner Drehlagerung 30 rotieren kann.

Die Permanentmagnetringe 26 und 29 sind beide in Richtung ihrer Ringachse gepolt und werden bei der Montage so orientiert angebracht, daß zwischen dem in Richtung des Reedkontaktes 27 verschobenen Magnetring 26 und dem mehr am distalen Ende des Lichtleiters befindlichen Magnetring 29 Anziehung herrscht. Bei dieser Anordnung der Magnetringe 26 und 29 entsteht von selbst eine definierte Ruhelage der verschiebbaren Hülse 10 auf dem Rohr 6, ähnlich der in Fig. 3 dargestellten, wobei in der Ruhe- bzw. Ausgangsposition der Hülse 10 die beiden Magnetringe 26, 29 etwas gegeneinander versetzt sind.

Verschiebt man mit nur leichtem Fingerdruck die Schiebehülse 10 und damit den Magnetring 26 in die Richtung des Reedschalters 27 - wobei nur wenige Millimeter Verschiebung genügen - wird der Reedschalter 27 aktiviert und somit der Schaltvorgang in dem hier nicht dargestellten Lampengerät ausgelöst. Die Anziehung zwischen den Magnetringen 26 und 29 durch das nichtmagnetische Alu-Rohr 6 sorgt dafür, daß die Hülse 10 nach dem Loslassen von selbst in ihre Ausgangslage zurückschnellt.

Die magnetische Rückstellkoppelung der verschiebbaren Hülse 10 hat gegenüber der Rückstellkoppelung der Hülse 10 mit Federkraft gemäß der ersten beschriebenen Ausführungsform folgende weitere Vorteile:
1. Da magnetische Anziehungskräfte bei minimaler Entfernung der beiden Permanentmagnetringe voneinander am stärksten sind und bei weiterer Entfernung schnell abnehmen - ganz im Gegensatz zur Elongation oder Kompression einer Spiralfeder -, entsteht hier eine Art Schaltschwelle, ähnlich wie bei einem mechanischen Lichtschalter. Dies verringert die Gefahr unbeabsichtigter Schaltvorgänge.
2. Da sowohl das Rohr 6 als auch die Innenfläche der Hülse 10 völlig glatte und homogene Oberflächen besitzen, und da außerdem die Hülse 10 mit dem darin integrierten Magnetring 26 leicht völlig vom Rohr 6 abgestreift und ebenso leicht auch wieder darauf zurückgeschoben werden kann, ergeben sich Bedingungen, die den hygienischen Anforderungen im zahnärztlichen Betrieb ideal gerecht werden. Sowohl das Rohr 6, als auch die abgestreifte Hülse 10 können leicht gereinigt werden, wobei auch flüssige Desinfektionsmittel eingesetzt werden können.
3. Bei flexiblen Lichtleitern mit voll rotierbarem Rohr 6 läßt sich der Lichtpuls mit dem erfindungsgemäßen, magnetischen Handschalter in jeder beliebigen Drehlage des Rohres 6 bequem auslösen.

Für den praktischen Betrieb kann es sinnvoll sein, die Elongation der verschiebbaren Hülse 10 in Richtung des Reedschalters 27 durch einen auf dem Rohr 6 in Nähe des Reedschalters 27 befindlichen Stopperring 31 zu begrenzen, was aber die hygienischen Bedingungen nicht beeinträchtigt.

Der Vollständigkeit halber soll noch erwähnt werden, daß nicht notwendigerweise beide Ringe 26 und 29 Permanentmagnete sein müssen. Einer der Ringe kann aus magnetisierbarem Material bestehen, z.B. aus magnetisierbarem Stahl oder Eisen.

Auch bei der Ausführungsform des Handschalters mit magnetischer Rückstellkraft gemäß Fig. 3 bleibt die volle Drehbarkeit des Rohres 6 erhalten, und es gelten die hierzu bereits genannten Vorteile.

Es wurde bereits darauf hingewiesen, daß von selbst eine definierte Ausgangsposition der Hülse 10 entsteht, wenn zwischen dem in Richtung des Reedschalters 27 verschobenen Magnetring 26 und dem festen Magnetring 29 (d.h. in ausgelenkter Lage) Anziehung herrscht. Die Bedingung der Anziehung ist - in Abhängigkeit von der Art und der vektoriellen Ausrichtung der Polarisation der ringförmigen Magneten 26 und 29 - bei einer Vielzahl von Fallgestaltungen erfüllt. Fig. 3a zeigt einen Fall, bei dem der feste Magnet 29 axial polarisiert ist (wobei in der Zeichnung der Nordpol N rechts und der Südpol S links liegt), wogegen der verschiebbare Magnet 26 radial polarisiert ist (wobei der Südpol S außen und der Nordpol N innen liegt). Der obere Teil der Figur zeigt die Ruhe- bzw. Ausgangsposition der Magnetanordnung. Die Nordpole N des Magneten 26 und die Südpole S des Magneten 29 ziehen sich an, so daß eine lagestabile Ausgangsposition gewährleistet ist. Verschiebt man den Magneten 26 nach links (siehe den unteren Teil der Figur), bleibt diese Anziehung bestehen, und der verschobene Magnet 26 strebt weiterhin seiner Ruhelage zu. Läßt man ihn abrupt los, schnellt er zurück. Es entsteht ein sogenannter "elastischer magnetischen Schalter", wobei der Begriff "elastisch" das Zurückstreben des verschobenen Magneten 26 in die Ruhelage zum Ausdruck bringen soll.

Tabelle 1 zeigt alle Fallgestaltungen der Polarisation, die einen elastischen magnetischen Schalter ergeben, und zwar sowohl unter Berücksichtigung von axialer als auch radialer Polarisation.

**Tabelle 1**

| Polarisationen, die einen elastischen magnetischen Schalter ergeben | | |
|---|---|---|
| Fall | verschobener Magnetring 26 | Magnetring 29 |
| 1 | axial N - S | axial N - S |
| 2 | axial N - S | radial Nₐ, Sᵢ |
| 3 | radial Nₐ, Sᵢ | axial N - S |
| 4 | radial Nₐ, Sᵢ | radial Nₐ, Sᵢ |

### Erläuterungen

- axiale Polarisationen sind von links nach rechts zu lesen, d.h. "axial N - S" bedeutet, daß der Nordpol N links und der Südpol S rechts angeordnet ist
- bei radialen Polarisationen haben die Indizes "a" bzw "i" die Bedeutung "außen" bzw. "innen"

Neben den in Tabelle 1 gezeigten vier Fallgestaltungen existieren jeweils vier äquivalente, bei denen alle Pole N und S vertauscht sind. Die in Fig. 3a zeigte Fallgestaltung ist äquivalent zu Fall 3, d.h. in der Figur liegt der Südpol S des radial polarisierten, verschobenen Magnetrings 26 außen und sein Südpol N innen, wogegen der Nordpol N des axial polarisierten, festen Magnetrings 29 rechts und sein Südpol S links liegt.

Weitere vorteilhafte Modifikationen der in Fig. 3 und 3a dargestellten elastischen magnetischen Schalters ergeben sich durch die nachfolgend beschriebenen Maßnahmen.

Statt eines Reedschalters 27 können im Innenraum des Rohrs 6 auch zwei oder mehrere Reedschalter in Serienschaltung montiert werden, wobei beide Reedschalter mit den Litzen 41, 42 verlötet sind. Vorzugsweise sind dann die beiden Reedschalter auf gleicher Position bezüglich der Achse des drehbaren Rohres 6, aber um 180° gegeneinander versetzt angeordnet. Die Verwendung von zwei in Serie geschalteten Reedschaltern erhöht die Sicherheit des Handschalters, falls bei einem Reedkontakt die Blättchen aneinander kleben bleiben.

Als Material für die Hülse 10 hat sich der Kunststoff Delrin® wegen seiner guten Gleiteigenschaft bewährt.

Einer der beiden Permanentmagnetringe, z.B. der Magnetring 26 kann radial, der fest sitzende Magnetring 29 jedoch axial polarisiert ist. Man erreicht dadurch einen etwas längeren Schiebeweg der Hülse 10 bis zum Auslösen des Schaltvorganges, sowie eine Variabilität der magnetischen Rückstellkraft.

Bei einer besonders bevorzugten Ausführungsform enthält deshalb das drehbare Rohr 6 des Flüssigkeitslichtleiters insgesamt drei Permanentmagnetringe. Der erste und vorderste distale Magnetring 8 haltert das gekrümmte Applikatorteil 7, welches von einer magnetisierbaren Edelstahlhülse 7b aufgenommen wird. Der Magnetring 8 ist axial polarisiert. Der zweite Permanentmagnetring 29 ist koaxial zum Magnetring 8 und koaxial zur Achse des zylindrischen, drehbaren Rohres 6, aber innerhalb des Rohres 6 und von diesem beabstandet, montiert. Seine magnetische Polarisierung ist ebenfalls axial, aber so, daß sich gleichnamige Magnetpole der Ringe 8 und 29 direkt gegenüberstehen. Der dritte Permanentmagnetring 26 umschließt das drehbare Rohr 6 und ist ebenfalls koaxial zum drehbaren Rohr 6 angeordnet. In Gegensatz zu den Magnetringen 8 und 29, ist der Magnetring 26 jedoch radial polarisiert. Der Magnetring 26 ist längs der Achse des Rohres 6 verschiebbar und erfährt bei Auslenkung in Richtung des Reedschalters 27 durch den inneren Magnetring 29 eine Rückstellkraft. Der auf dem Rohr 6 integrierte Stopperring 31 begrenzt die Auslenkung des in der Hülse 10 befindlichen Magnetringes 26. Sobald sich der Magnetring 26 in einer Distanz von ca. 1 bis 5 mm zum Stopperring befindet, schließt der Reedschalter 27 - der zwischen Lichtleiter 2 und Rohr 6 so angeordnet ist, daß er hinreichend von allen drei Magnetringen 8, 26 und 29 beabstandet ist -, so daß er in der Ruheposition der Hülse 10 offengeschaltet ist. Die Schaltauslenkung der Hülse 10 bzw. des Magnetrings 26 beträgt ca. 5 bis 10 mm.

Bei dieser Anordnung der Magnetringe 26 und 29 entsteht von selbst eine definierte Ruhelage der Schiebehülse 10 auf dem Rohr 6, ähnlich wie in Fig. 3 dargestellt, wobei in der Ruhe- bzw. Ausgangsposition der Schiebehülse 10 die beiden Magnetringe 26, 29 etwas gegeneinander versetzt sind.

Neben der bereits erwähnten Möglichkeit, einen der ringförmigen Magneten 26 bzw. 29 nicht als Permanentmagneten auszuführen, sondern aus magnetisierbarem Material (z.B. aus magnetisierbarem Stahl oder Eisen), sei noch erwähnt, daß statt der Permanentmagnetringe auch Ringstrukturen verwendet werden können, die sich aus mehreren Sektoren zusammensetzen, die kreisförmig um die Achse des drehbaren Rohres 6 angeordnet sind. Als magnetisierbares Material können einzelne Permanentmagneten oder magnetisierbare Materialien Einsatz finden. Auch kreisförmig gebogene magnetische Folien sind geeignet.

Statt eines Reedschalters 27 kann man auch einen magnetisch aktivierbaren Hall-Schalter verwenden, der eine elektrische Hilfsspannung und daher auch mindestens drei Zuführungslitzen benötigt.

Wenn es aus Gründen der Ergonomie des Lichtleiters mit Handschalter erwünscht ist, daß die Hülse 10 ganz distal - also auf dem Rohr 6 so weit wie möglich am Lichtaustrittsende - positioniert ist, kann der innere Hattemagnetring 29 wegfallen. In diesem Fall übernimmt dann der Permanentmagnetring 8 (siehe auch Fig. 1) zusätzlich zu seiner Funktion der Halterung des gekrümmten Applikatorteiles 7 noch die Funktion der magnetischen Positionierung und der Rückstellwirkung der Hülse 10 mit integriertem Ringmagneten 26.

Der beschriebene elastische Schalter kann in einen sogenannten "magnetischen Kippschalter" umgewandelt werden, indem man bei jeder Fallgestaltung eine Polarisation invertiert.

Bei einem erfindungsgemäßen magnetischen Kippschalter hat der verschiebbare Magnet eine lagestabile Ausgangsposition und eine lagestabile Schaltposition. Der Kippschalter wird gebildet wird durch das Zusammenwirken des verschiebbaren Magneten mit einem zweiten ringförmigen Magneten, der im Inneren des drehbaren Rohres koaxial zum verschiebaren Magneten und fest auf dem Flüssigkeitlichtleiter angeordnet ist. Wird der verschiebare Magnet in eine Lage gebracht, daß er über dem festen Magneten liegt (das ist möglich, weil er einen größeren Durchmesser hat und außen am drehbaren Rohr anliegt), gibt es - wiederum in Abhängigkeit von der Art und der vektoriellen Ausrichtung der Polarisation der ringförmigen Magneten 26 und 29 - Fallgestaltungen, bei denen der feste Magnet den verschiebaren Magneten quasi "einfängt" und eine lage stabile Ausgangsposition des verschiebaren Magneten zustandekommt, bei der sich die magnetischen Kräfte in einem metastabilen Gleichgewicht befinden. Wenn gleichzeitig die Magnete so orientiert sind, daß zwischen dem festen Magneten 29 und dem in Richtung des magnetischen aktivierbaren Schalters verschobenen beweglichen Magneten 26 Abstoßung herrscht, wird der verschiebbare Magnet nach Überwindung des metastabilen Gleichgewichts abgestoßen, d.h. er bewegt sich vom festen Magneten weg. Begrenzt man seine Bewegungsmöglichkeit so, daß er in einer Lage fixiert wird, in der der magnetisch aktivierbare Schalter dauernd eingeschaltet bleibt, entsteht so eine lagestabile Schaltposition. Gemäß einer bevorzugten Ausführungsform des magnetischen Kippschalters wird die lagestabile Schaltposition des verschiebaren Magneten durch einen Stopperring gebildet, der die Verschiebbarkeit des Magneten in Richtung auf den magnetisch aktivierbaren Schalter begrenzt. Bevorzugt ist der verschiebbare Magnet im Inneren der Hülse angebracht, die das drehbare Rohr umgibt und axial darauf verschiebbar ist.

Tabelle 2 zeigt alle Fallgestaltungen der Polarisation, die einen magnetischen Kippschalter ergeben, wiederum sowohl unter Berücksichtigung von axialerals auch radialer Polarisation.

**Tabelle 2**

| Polarisationen, die einen magnetischen Kippschalter egeben | | |
|---|---|---|
| Fall | verschobener Magnetring 26 | Magnetring 29 |
| 1 | axial N - S | axial S - N |
| 2 | axial N - S | radial Sₐ, Nᵢ |
| 3 | radial Nₐ, Sᵢ | axial S - N |
| 4 | radial Nₐ, Sᵢ | radial Sₐ, Nᵢ |

### Erläuterungen

- axiale Polarisationen sind von links nach rechts zu lesen, d.h. "axial N - S" bedeutet, daß der Nordpol N links und der Südpol S rechts angeordnet ist
- bei radialen Polarisationen haben die Indizes "a" bzw "i" die Bedeutung "außen" bzw. "innen"

Es existieren ebenfalls jeweils vier äquivalente Fallgestaltungen, bei denen alle Pole N und S vertauscht sind. Die in Fig. 3b gezeigte Fallgestaltung ist äquivalent zu Fall 3 von Tabelle 2. Im oberen Teil der Figur ist wiederum die lagestabile Ausgangsposition dargestellt, die hier durch ein metastabiles Kräftegleichgewicht bewirkt wird. Der verschiebare Magnet 26 ist radial polarisiert, wobei der Südpol S außen und der Nordpol N innen liegt. Dagegen ist der feste Magnet 29 axial polarisiert, wobei der Südpol S rechts und der Nordpol N links liegt. In der Ausgangsposition ziehen sich der rechts gelegene Südpol S des festen Magneten 29 und der innen gelegene Nordpol N des verschiebaren Magneten 26 an, so daß die Magnetanordnung lagestabil ist. Das Kräftegleichgewicht ist jedoch metastabil, weil beim Verschieben des Magneten 26 nach links die Abstoßungskräfte zwischen dem nach links zeigendem Nordpol N des festen Magneten 29 und dem innen gelegenem Nordpol N des radial polarisierten, verschobenen Magneten 26 stetig zunehmen. Verschiebt man den Magneten 26 also über einen gewissen Punkt hinaus, so treten Kräfte auf, die das System weiter aus der alten Gleichgewichtslage entfernen, d.h. die Abstoßungskräfte gewinnen die Oberhand und bewegen den Magneten 26 von sich aus weiter nach links. In der Figur ist durch den Stopperring 31 dafür gesorgt, daß die Verschiebbarkeit des Magneten 26 in Richtung auf den magnetisch aktivierbaren Schalter 27 begrenzt wird. Er bleibt somit in einer Lage stehen, in der der Reedschalter 27 dauerhaft eingeschaltet ist.

Ein anderer magnetischer Kippschalter für den erfindungsgemäßen Lichtleiter entsteht durch eine Anordnung von drei zueinander koaxialen ringförmigen Magneten, die ebenfalls eine lagestabile Ausgangsposition und eine lagestabilen Schaltposition bilden. Diese Magnetanordnung umfaßt zwei miteinander verbundene endständige Magnete und einen mittelständigen Magneten, wobei der mittelständige Magnet und die endständigen Magneten so übereinander schiebbar sind, daß der mittelständige Magnet zwischen den endständigen Magneten angeordnet ist. In dieser Lage gibt es wiederum Fallgestaltungen, bei denen sich die Magneten gegenseitig quasi "einfangen" und eine lagestabile Ausgangsposition der Magnetanordnung zustandekommt, bei der sich magnetischen Kräfte in einem metabstabilen Gleichgewicht befinden.

Zur Erzeugung der lagestabilen Schaltposition des Schalters sind die Magnete so bewegbar, daß entweder der mittelständige Magnet feststeht und die endständgen Magnete relativ dazu und so weit verschiebbar sind, daß sie lagestabil zwischen dem magnetisch aktivierbaren Schalter und dem mittelständigen Magneten positioniert sind. Alternativ können die endständigen Magnete feststehen und der mittelständige Magnet relativ dazu und so weit verschiebbar sein, daß er lagestabil zwischen dem magnetisch aktivierbaren Schalter und einem der endständigen Magneten positioniert ist. Um diese Verschiebbarkeit zu erreichen, sind entweder die endständigen Magnete auf dem drehbaren Rohr axial verschiebbar, und der mittelständige Magnet ist fest auf dem Lichtleiter angeordnet, oder der mittelständige Magnet ist auf dem drehbaren Rohr axial verschiebbar, und die endständigen Magneten sind fest auf dem Lichtleiter angeordnet. Die Möglichkeit des Übereinanderschiebens der Magente ergibt sich durch ihren unterschiedlichen Durchmesser.

Wahlweise können der oder die verschiebbare(n) Magnet(e) in der verschiebbaren Hülse angeordnet sein.

Die Vorteile der beschriebenen magnetischen Kippschalter (dies gilt gleichermaßen für die Ausführungsform gemäß Fig. 3b und für den hier beschriebenen Kippschalter mit drei Magneten) liegen einmal darin, daß bei Auslenkung in Richtung des magnetischen Schalters ein höherer Widerstand zu überwinden ist. Außerdem schnellen Kippschalter nicht selbstständig in die Ausgangsposition zurück, sondern verbleiben in ihrer lagestabilen Schaltposition. Um einen neuen Lichtpuls auszulösen, muß man die Hülse 10 erst wieder in die Ausgangsposition zurückschieben und dabei wiederum einen gewissen - quasi mechanischen - Widerstand überwinden. Dieses Schaltverhalten führt dazu, daß nicht so leicht ein unbeabsichtigter Lichtpuls ausgelöst wird, der den Patienten blenden würde.

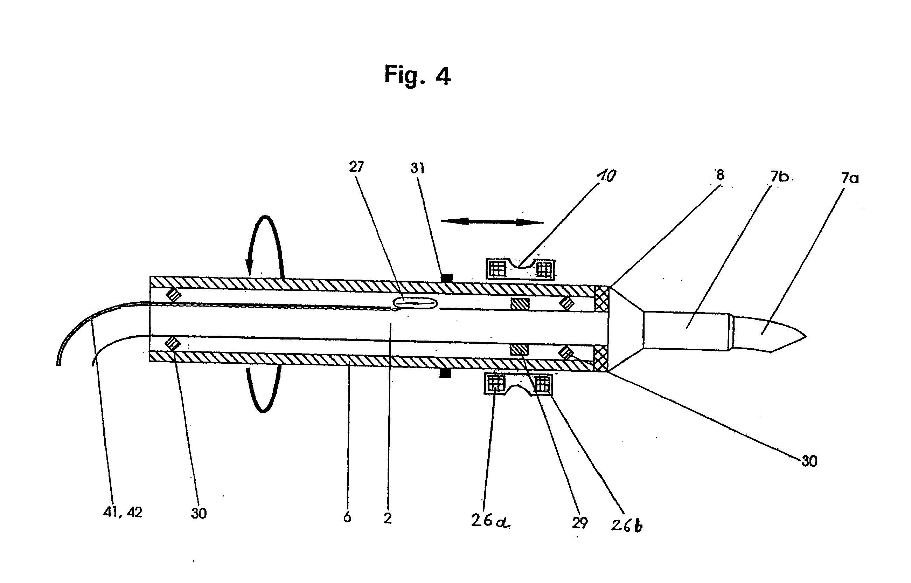

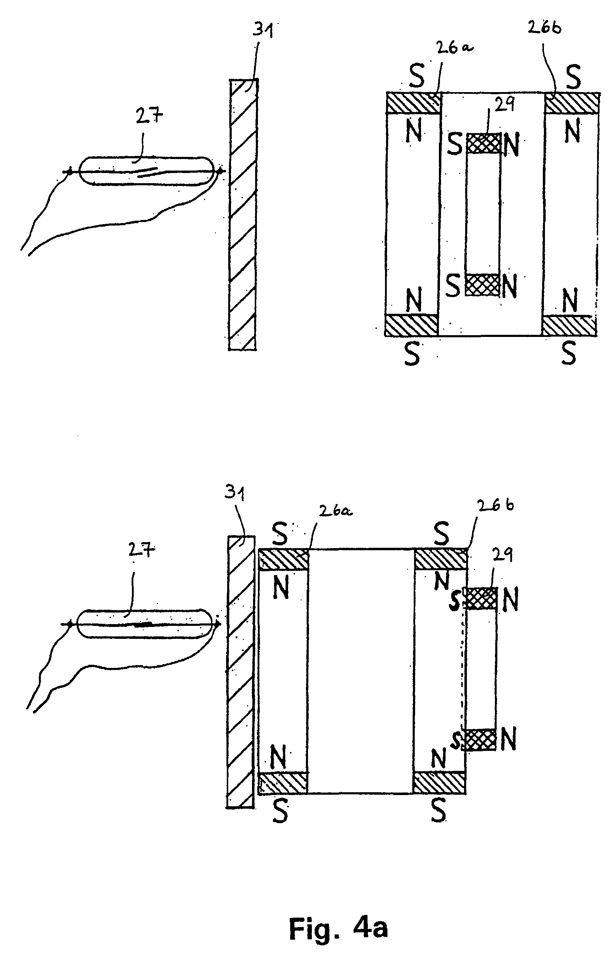

Eine Ausführungsform gemäß der ersten obigen Alternative ist in Fig. 4 gezeigt. Sie entspricht weitgehend Fig. 3, abweichend davon enthält die Hülse 10 aber nicht einen, sondern zwei voneinander beabstandete und koaxial angeordnete ringförmige Magnete 26a und 26b; diese bilden die endständigen Magnete. Der ringförmige Magnet 29 ist gegenüber Fig. 3 unverändert und bildet den mittelständigen Magneten. Er hat die Doppelfunktion eines Rückstell- und Haltemagneten. In der gezeigten Ausgangsposition ist die Hülse 10 so positioniert, daß der mittelständige Magnet 29 im wesentlichen mittig zwischen den endständigen Magneten 26a und 26b angeordnet ist. Gleichnamige Pole der Magnete 29 und 8 stehen sich gegenüber.

Das Erreichen einer lagestabilen Ausgangsposition wurde bereits im Zusammenhang mit Fig. 3b erläutert; für die Anordnung mit drei Magneten gelten entspechende Überlegungen. Für das Erreichen einer lagestabilen Schaltposition ist es aber nicht unbedingt erforderlich, die Verschiebbarkeit der verschobenen Magneten 26a und 26b zu begrenzen. Es gibt nämlich Fallgestaltungen der Polarisation, bei denen der rechte endständige Magnet 26b in der Schaltposition vom mittelständigen Magneten 29 angezogen wird. Er verbleibt dann wegen dieser Anziehung stabil in der Schaltposition, ohne daß eine Bewegungsbegrenzung in Gestalt eines Stopperings 31 erforderlich ist. Nur wenn er vom mittelständigen Magneten 29 abgestoßen wird, muß eine Begrenzung vorgesehen sein.

Einzelheiten hierzu sind der schematischen Darstellung von Fig. 4a zu entnehmen. Diese entspricht der Ausführungsform von Fig. 4, wobei ein fester ringförmiger Magnet 29 mit axialer Polarisierung sowie zwei verschiebbare ringförmige Magnete 26a und 26b mit radialer Polarisierung vorgesehen sind; letztere bilden die endständigen Magnete. Der obere Teil von Fig. 4a zeigt die Anordnung der Magnete in der Ausgangsposition. Ähnlich wie in Fig. 3b ist ihre Lage zueinander stabil, weil der Nordpol N des axial polarisierten Magneten 29 und der Nordpol N des radial polarisierten Magneten 26b einander abstoßen. Andererseits ziehen sich der Südpol S des axial polarisierten Magneten 29 und der Nordpol N des radial polarisierten Magnets 26a an.

Verschiebt man die endständigen ringförmigen Magnete 26a und 26b zusammen in der Zeichnung nach links, ist zunächst ein Widerstand zu überwinden, der durch die Abstoßung des Nordpols N des axial polarisierten Magneten 29 mit dem Nordpol N des radial polarisierten Magneten 26b entsteht. Nach Überwindung des Widerstandes erreicht die Anordnung der Magneten die Schaltposition, in der sie stabil liegen bleiben, weil der Nordpol N des radial polarisierten Magneten 26b und der Südpol S des axial polarisierten Magneten 29 einander anziehen. Eine lagestabile Schaltposition ist also - auch ohne Bewegungsbegrenzung - gegeben. Darin liegt ein besonderer Vorteil dieser Ausführungsform des magnetischen Kippschalters mit drei Magneten.

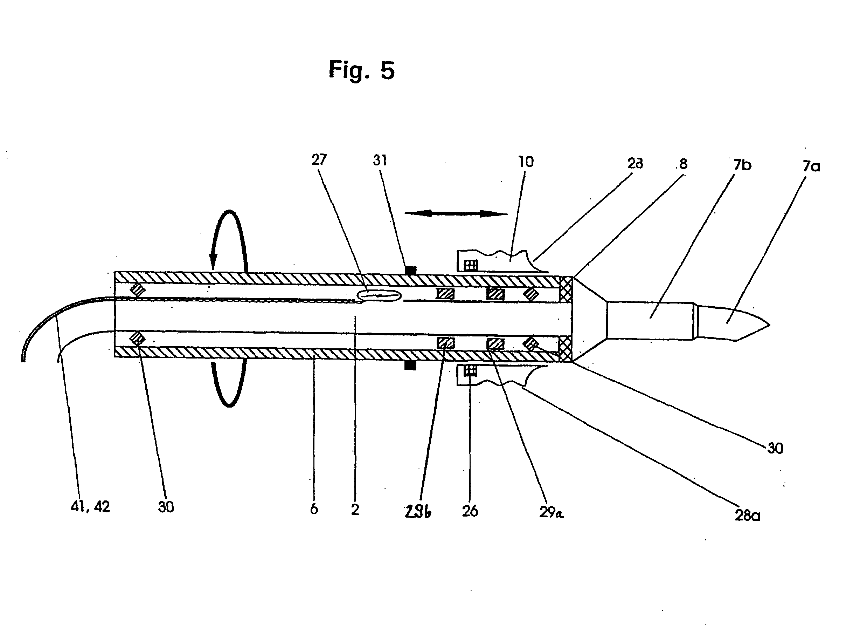

Eine Ausführungsform gemäß der zweiten obigen Alternative zeigt Fig. 5. Hier ist die Hülse 10 mit dem (hier radial polarisierten) Magneten 26 wie bei Fig. 3 gestaltet, wobei der Magnet 26 den mittelständigen Magneten bildet. Der Magnet 29 von Fig. 3 ist jedoch in zwei beabstandete (hier axial polarisierte) Magneten 29a und 29b aufgespalten, die die endständigen Magnete bilden.

Die Ausführungsform gemäß Fig. 5 ist weniger bevorzugt als die von Fig. 4. Der Vorteil des Handschalters von Fig. 4 liegt darin, daß man ihn wahlweise als Anordnung mit zwei oder mit drei Magneten betreiben kann, indem man über das drehbare Rohr 6 entweder die Hülse von Fig. 3 (ein Magnet) oder diejenige von Fig. 4 (zwei Magneten) schiebt und alleine dadurch - d.h. ohne weitere konstruktive Eingriffe- das unterschiedliche Schaltverhalten erhält. Beim Handschalter von Fig. 5 dagegen müßte das Innere des Lichtleiters 2 verändert werden.

Am meisten bevorzugt ist im Moment die Ausführungsform des erfindungsgemäßen Lichtleiters gemäß Fig. 3. Ein praktisches Ausführungsbeispiel davon ist bezüglich seiner Materialien, Abmessungen und magnetischen Daten wie folgt spezifiziert. Der ringförmige Magnet 29 ist axial polarisiert, wobei der Nordpol der distalen Lichtleiterseite zugewandt ist. Der Magnet selbst besteht aus Neodym/Eisen/Bor-Sintermaterial, hat eine Dicke von 2,5 mm, einen Außendurchmesser von 11,7 mm und einen Innendurchmesser von 9,1 mm. Der in der Hülse 10 angeordnete ringförmige Magnet 26 ist radial polarisiert, wobei der Südpol außen und der Nordpol innen liegt. Er besteht aus kunststoffgebundenem Neodym/Eisen/Bor-Material, hat eine Dicke von 4 mm, einen Außendurchmesser von 18 mm und einen Innendurchmesser von 15 mm. Das drehbare Rohr 6 besteht aus Aluminium und hat die Abmessungen Øₐ = 14 mm, Øᵢ = 12 mm und I = 130 mm. Der Stopperring 31 befindet sich etwa 15 mm beabstandet vom inneren ringförmigen Magneten 29. Der magnetisch aktivierbare Schalter 27 ist ein Reedschalter 27 und hat die Abmessungen I = 11 mm, d = 2,1 mm; seine Empfindlichkeit liegt im Bereich von 10 bis 25 Ampèrewindungen.

Eine praktische Ausführungsform des - ähnlich bevorzugten - erfindungsgemäßen Lichtleiters gemäß Fig. 4 ist wie folgt spezifiziert. Die beiden ringförmigen Magnete 26a und 26b sowie der ringförmige Magnet 29 sind spezifiziert wie vorstehend für Fig. 3 beschrieben. Die Magneten 26a und 26b sind in der Hülse 10 in einem Abstand von ca. 3 bis 10 mm zueinander angeordnet. Die Lage des Stopperrings 31, des ringförmigen Magneten 29 und des Reedschalters 27 sind ebenfalls so spezifiziert wie vorstehend bei Fig. 3 beschrieben; dies gilt auch für ihre Materialien und Abmessungen.

Bei einem praktischen Ausführungsbeispiel eines - weniger bevorzugten - erfindungsgemäßen Lichtleiters gemäß Fig. 5 ist die Spezikationen der ringförmigen Magneten 29a und 29b identisch mit der des ringförmigen Magneten 29 von Fig. 3. Die Magnete 29a und 29b sind koaxial zur Achse des Lichtleiters 2, aber nur wenige mm voneinander entfernt distal angeordnet, wobei gleichnamige Magnetpole einander gegenüberstehen.

In dem Polymerisationsgerät (1), an welches der Flüssigkeitslichtleiter mit einem der erfindungsgemäßen Handschalter angekoppelt wird, können beliebige Lampen enthalten sein. Besonders vorteilhaft wirkt sich der neue Flüssigkeitslichtteiter mit Handschalter jedoch aus bei dem Polymerisationsgerät mit einer Ultrahochdruck-Quecksilberlampe wie der UHP-Lampe von Philips (z.B. UHP 120W) oder der baugleichen VIP-Lampe von Osram (z.B. VIP 120W), welche mit einem außergewöhnlich hohen Hg-Dampf-Betriebsdruck von ca. 200 at arbeiten. Diese Lampen bestehen aus dem Hg-Brenner in einem dickwandigen Quarzglaskolben, welcher seinerseits in einen elliptoidförmigen Glaskörper einzementiert ist, so daß der Plasma-Mittelpunkt des Hg-Brenners mit dem einen Brennpunkt des Elliptoids deckungsgleich liegt. Die Innenfläche des Elliptoids weist eine selektive dielektrische Dünnschicht-Verspiegelung auf, welche für dentale Polymerisation in dem Bereich von 400nm < λ < 500nm besonders hoch ist ( R nahe 100%) und für Wellenlängen > 500nm möglichst niedrig ist (R nahe 0%). Für die Polymerisation von Füllungen im Dentalbereich wird der spektrale Nutzbereich durch zusätzliche Dünnschichtfilter, welche vor der Lichteintrittsfläche des Lichtleiters positioniert sind, auf den Wellenlängenbereich 430nm < λ < 500nm weiter eingeschränkt. Für die industrielle Polymerisation sollte die Verspiegelung so sein, daß sich auch im UV-Bereich, d.h. für 250 nm < λ < 400nm eine hohe Reflektivität ergibt.

Wegen des hohen Betriebsdrucks der UHP- und der VIP-Lampen von etwa 200 at ist es aus Sicherheitsgründen, wegen der Explosionsgefahr des Brenners, angebracht, die Strahlaustrittsöffnung des Elliptoidreflektors mit einer dickwandigen (d = 3mm) aufzementierten, aufgeklebten oder angeschweißten, transparenten Planplatte z.B. aus Quarzglas oder Tempax7-Glas abzudecken.

Derartige Lampengeräte für die Polymerisation mit UHP- oder VIP-Lampen sind bereits in der deutschen Patentanmeldung Az 198 38 166.2 beschrieben worden. Sie zeichnen sich durch einen außergewöhnlich hohen optischen Wirkungsgrad aus, weshalb man schon mit Lampen von nur 120W elektrischer Eingangsleistung aus einem Flüssigkeitslichtleiter mit einem lichtaktiven Kern von 5mm Ø derart hohe Strahlungsleistungen in dem für die Polymerisation nützlichen UV- bzw. Blaubereich erhält (im Wattbereich), daßin der Zahnheilkunde eine Blitzpolymerisation möglich ist, welche nur ca. eine Sekunde dauert.

Wegen der geringen erforderlichen elektrischen Eingangsleistung können solche Polymerisationsgeräte mit VIP7- oder UHP7-Lampe sehr klein und mit nur geringem Gewicht gebaut werden, was diese Geräte leicht transportabel macht, z.B. zwischen mehreren Behandlungseinheiten in einer Zahnarztpraxis.

Die Verfügbarkeit eines Handschalters am Lichtleiterende erleichtert zusätzlich den mobilen Einsatz dieses Polymerisationsgerätes, weil der hinderliche Fußschalter nicht immer wieder neu installiert werden muß.

### Bezugszeichenliste

- 1: Lampengehäuse
- 2: Lichtleiter
- 3: Empfängermodul
- 4: Endteil
- 5: Pistolengriff, Griff
- 6: Handrohr
- 7: Applikatorteil
- 7a: Applikatorfenster
- 8: Magnetring
- 8a: Lichtleiterende
- 9: Ablage
- 10: Trigger, Hülse
- 11 12 13: Leuchtdiode
- 14: Batteriehalter
- 15: Verschlußdeckel
- 16: Batterie
- 17 18: Kontaktschalter
- 19 20 21 22 23: Schalter
- 2n6: (Miniatur)sender, Platine
- 25: Codier(chip)
- 26: Permanentmagnetring
- 26a: Permanentmagnetring
- 26b: Permanentmagnetring
- 27: magnetisch aktivierbarer Schalter
- 28: Fingergriffmulde
- 28a: Riffelung
- 29: Permanentmagnetring
- 29a: Permanentmagnetring
- 29b: Permanentmagnetring
- 30: Drehlagerung
- 31: Wanne
- 32: Griffteil
- 33 34 35 36 37 38 39 40 41: Draht, Litze
- 42: Draht, Litze

## Patentansprüche

1. Lichtleiter (2) für eine optische Beleuchtungsanordnung, aufweisend ein an seinem Lichtaustrittsende angeordnetes Rohr (6),
**dadurch gekennzeichnet, daß**
das Rohr (6) aus einem nichtmagnetischen Material besteht,
wobei der Lichtleiter (2) einen Handschalter zur Steuerung des Strahlungsflusses der optischen Beleuchtungsanordnung aufweist, der gebildet wird durch
- mindestens einen zwischen dem Lichtleiter (2) und dem Rohr (6) angeordneten magnetisch aktivierbaren Schalter (27), der auf dem Außenmantel des Lichtleiters (2) fest angebracht und von der Innenoberfläche des Rohrs (6) beabstandet ist, und
- mindestens einen auf dem Rohr (6) angeordneten ringförmigen Magneten (26), der am Rohr (6) eng anliegt und axial darauf von einer Ausgangsposition zu einer Schaltposition verschiebbar ist, in der der magnetisch aktivierbare Schalter (27) betätigt wird,
- wobei vom magnetisch aktivierbaren Schalter (27) zwei dünne Litzen oder Drähte (41, 42) ausgehen, welche zum Lichteintrittsende verlaufen.

2. Lichtleiter nach Anspruch 1, **dadurch gekennzeichnet, daß** das Rohr (6) frei drehbar ist.

3. Lichtleiter nach Anspruch 1 oder 2, **dadurch gekennzeichnet, daß** der Lichtleiter ein Flüssigkeitslichtleiter ist, der aus einem Schlauch aus einem Kohlenstoff/Fluor-Polymer aufgebaut und mit einer Flüssigkeit gefüllt ist und einen äußeren Schutzschlauch aufweist, wobei die Litzen oder Drähte (41, 42) zwischen dem flüssigkeitsgefüllten Schlauch und dem äußeren Schutzschlauch zum Lichteintrittsende verlaufen.

4. Lichtleiter nach einem der vorhergehenden Ansprüche, **dadurch gekennzeichnet, daß** das Rohr (6) eine darauf fixierte mechanische Begrenzung (31) aufweist, die die Verschiebbarkeit des Magneten (26) in axialer Richtung des Rohres (6) begrenzt.

5. Lichtleiter nach einem der vorhergehenden Ansprüche, **dadurch gekennzeichnet, daß** die mechanische Begrenzung ein die Verschiebbarkeit des Magneten (26) in Richtung auf den magnetisch aktivierbaren Schalter (27) begrenzender Stopperring (31) ist.

6. Lichtleiter nach Anspruch 5, **dadurch gekennzeichnet, daß** der verschiebbare Magnet (26) im Inneren einer das Rohr (6) umgebenden, axial darauf verschiebbaren Hülse (10) angeordnet ist.

7. Lichtleiter nach einem der vorhergehenden Ansprüche, **gekennzeichnet durch** ein Element zur Erzeugung einer Rückstellkraft für den Magneten (26).

8. Lichtleiter nach einem der Ansprüche 1 bis 6, **dadurch gekennzeichnet, daß**
- der Handschalter ein magnetischer Kippschalter ist, bei dem der verschiebbare Magnet (26) eine lagestabile Ausgangsposition und eine lagestabile Schaltposition hat,
wobei der Kippschalter gebildet wird durch das Zusammenwirken
- des verschiebbaren Magneten (26) mit
- mindestens einem zweiten ringförmigen Magneten (29), der im Inneren des Rohres (6) koaxial zum Magneten (26) und fest auf dem Lichtleiter (2) angeordnet ist, so daß der Magnet (26), der am über den Lichtleiter (2) gesteckten Rohr (6) verschiebbar anliegt, über den festen Magneten (29) schiebbar ist und in dieser Lage die aufgrund eines metastabilen Kräftegleichgewichts lagestabile Ausgangsposition bildet,
- wobei die Magnete (26) und (29) so polarisiert sind, daß zwischen dem festen Magneten (29) und dem in Richtung des magnetisch aktivierbaren Schalters (27) verschobenen Magneten (26) Abstoßung herrscht und der verschobene Magnet (26) eine lagestabile Schaltposition einnimmt.

9. Lichtleiter nach Anspruch 8, **dadurch gekennzeichnet, daß** die lagestabile Schaltposition des verschiebbaren Magneten (26) durch den Stopperring (31) gebildet wird.

10. Lichtleiter nach Anspruch 7, **dadurch gekennzeichnet, daß** zur Erzeugung der Rückstellkraft im Inneren der Hülse (10) eine Spiralfeder (24) und ein auf dem Rohr (6) fixierter, schneidenförmiger Stopperring (25) angeordnet sind, wobei sich die Spiralfeder (24) auf der einen Seite und der Magnet (26) auf der anderen Seite des Stopperrings (25) befindet.

11. Lichtleiter nach Anspruch 7, **dadurch gekennzeichnet, daß** zur Erzeugung der Rückstellkraft im Inneren des Rohres (6) koaxial zum Magneten (26) mindestens ein zweiter ringförmiger Magnet (29) fest und so polarisiert auf dem Lichtleiter (2) angeordnet ist, daß zwischen ihm und dem in Richtung des magnetisch aktivierbaren Schalters (27) verschobenen Magneten (26) Anziehung herrscht.

12. Lichtleiter nach Anspruch 11, **dadurch gekennzeichnet, daß** mindestens einer der Magnete (26, 29) ein Permanentmagnet ist und der andere Magnet wahlweise aus einem magnetisierbaren Material aufgebaut ist.

13. Lichtleiter nach Anspruch 11, **dadurch gekennzeichnet, daß** der verschiebbare und der feste Magnet (26, 29) axial polarisierte Permanentmagnete sind, deren Polarisationsachsen in die gleiche Richtung weisen.

14. Lichtleiter nach Anspruch 11, **dadurch gekennzeichnet, daß** entweder der feste Magnet (29) oder der verschiebbare Magnet (26) ein radial polarisierter Permanentmagnet ist.

15. Lichtleiter nach Anspruch 11, **dadurch gekennzeichnet, daß** beide Magnete (26, 29) radial polarisierte Permanentmagnete sind.

16. Lichtleiter nach Anspruch 11, **dadurch gekennzeichnet, daß** der verschiebbare Magnet (26) ein radial und der feste Magnet (29) ein axial polarisirter Permanentmagnet ist.

17. Lichtleiter nach einem der Ansprüche 1 bis 6, **gekennzeichnet durch** eine Anordnung von drei zueinander koaxialen ringförmigen Magneten, die einen magnetischer Kippschalter mit einer lagestabilen Ausgangsposition und einer lagestabilen Schaltposition bilden, wobei
(a) die Anordnung zwei miteinander verbundene endständige Magnete (26a, 26b; 29a, 29b) und einen mittelständigen Magneten (29; 26) umfaßt,
(b) der mittelständige Magnet (29; 26) und die endständigen Magnete (26a, 26b; 29a, 29b) so übereinander schiebbar sind, daß der mittelständige Magnet (29; 26) zwischen den endständigen Magneten (26a, 26b; 29a, 29b) angeordnet ist und die Magnetanordnung in dieser Lage die aufgrund eines metabstabilen Kräftegleichgewichts lagestabile Ausgangsposition bildet, und
(c) zur Erzeugung der lagestabilen Schaltposition des Schalters die Magnete so bewegbar sind, daß entweder
(c1) der mittelständige Magnet (29) feststeht und die endständgen Magnete (26a, 26b) relativ dazu und so weit verschiebbar sind, daß sie lagestabil zwischen dem magnetisch aktivierbaren Schalter (27) und dem mittelständigen Magneten (29) positioniert sind, oder
(c2) die endständigen Magnete (29a, 29b) feststehen und der mittelständige Magnet (26) relativ dazu und so weit verschiebbar ist, daß er lagestabil zwischen dem magnetisch aktivierbaren Schalter (27) und einem der endständigen Magneten (29b) positioniert ist, wobei entweder
(c3) die endständigen Magnete (26a, 26b) auf dem Rohr (6) axial verschiebbar sind, der mittelständige Magnet (29) jedoch fest auf dem Lichtleiter (2) angeordnet ist, oder
(c4) der mittelständige Magnet (26) auf dem Rohr (6) axial verschiebbar ist, die endständigen Magnete (29a, 29b) jedoch fest auf dem Lichtleiter (2) angeordnet sind,
wobei der/die verschiebbare(n) Magnet(e) (26; 26a, 26b) wahlweise in der verschiebbaren Hülse (10) angeordnet sind.

18. Lichtleiter nach Anspruch 17, **dadurch gekennzeichnet, daß** die lagestabile Schaltposition des/der verschiebbaren Magnete(n) (26; 26a, 26b) durch den Stopperring (31) gebildet wird.

19. Lichtleiter nach einem der Ansprüche 8 bis 18, **dadurch gekennzeichnet, daß** koaxial zu den ringförmigen Magneten (26, 29; 26a, 26b, 29; 26, 29a, 29b) ein weiterer ringförmiger Magnet (8) fest auf dem Lichtleiter (2) vorgesehen ist, der der mechanischen Sicherung eines Applikatorteils (7b) dient und am Lichaustrittsende des Lichtleiters (2) positioniert ist, wobei die Magnete (29; 29a, 29b) und (8) axial polarisiert sind und sich gleichnamige Magnetpole dieser Magnete (29; 29a, 29b) und (8) direkt gegenüberstehen und wobei die Magnete (26, 29; 26a, 26b, 29; 26, 29a, 29b) und (8) Permanentmagnete sind.

20. Lichtleiter nach einem der vorhergehenden Ansprüche, **gekennzeichnet durch** mindestens zwei in Serie geschaltete magnetisch aktivierbare Schalter (27).

21. Lichtleiter nach einem der vorhergehenden Ansprüche, **dadurch gekennzeichnet, daß** der bzw. die magnetisch aktivierbaren Schalter (27) Reedschalter oder Hallschalter sind.

22. Lichtleiter nach einem der Ansprüche 6 bis 21, **dadurch gekennzeichnet, daß** die Hülse (10) lichtaustrittsseitig eine rotationssymmetrische Fingergriffmulde (28) und wahlweise auf ihrer Oberfläche rundumlaufend eine Riffelung (28a) aufweist.

23. Lichtleiter nach einem der vorhergehenden Ansprüche, **dadurch gekennzeichnet, daß** die eingesetzten Magnete (8, 26, 29) wahlweise Ringstrukturen sind, die
aus mehreren diskreten und kreisförmig angeordneten Sektoren aus magnetischem Material aufgebaut sind, wobei das magnetische Material ein Permanentmagnet oder ein magnetisierbares Material ist,
oder Ringstrukturen, die aus ringförmig gebogenen magnetischen Folien aufgebaut sind.

## Claims

1. Light guide (2) for an optical lighting arrangement, comprising a tube (6) arranged at its light exit end, **characterised in that** the tube (6) consists of a nonmagnetic material, the light guide (2) comprising a hand switch for controlling the radiant flux of the optical lighting arrangement, formed by
- at least one magnetically activated switch (27) arranged between the light guide (2) and the tube (6), fixedly mounted on the outer sheath of the light guide (2) and arranged at a distance from the inner surface of the tube (6), and
- at least one annular magnet (26) which is arranged on the tube (6), bears snugly against the tube (6) and is displaceable axially thereon from an initial position to a switch position in which the magnetically activated switch (27) is actuated,
two thin flexes or wires (41, 42) departing from the magnetically activated switch (27) and extending towards the light entry end.

2. Light guide according to claim 1, **characterised in that** the tube (6) is freely rotatable.

3. Light guide according to claim I or claim 2, **characterised in that** the light guide is a liquid light guide which is made from a hose made of a carbon/fluorine polymer, is filled with a liquid and comprises an outer casing, the flexes or wires (41, 42) extending between the liquid-filled hose and the outer casing towards the light entry end.

4. Light guide according to one of the preceding claims, **characterised in that** the tube (6) comprises a mechanical limiting device (31) which is fixed thereto and limits the displaceability of the magnet (26) in the axial direction of the tube (6).

5. Light guide according to one of the preceding claims, **characterised in that** the mechanical limiting device is a stop ring (31) limiting the displaceability of the magnet (26) in the direction of the magnetically activated switch (27).

6. Light guide according to claim 5, **characterised in that** the displaceable magnet (26) is arranged in the interior of a sleeve (10) surrounding the tube (6) and axially displaceable thereon.

7. Light guide according to one of the preceding claims, **characterised by** an element for producing a restoring force for the magnet (26).

8. Light guide according to one of claims 1 to 6, **characterised in that**
- the hand switch is a magnetic toggle switch in which the displaceable magnet (26) has a stable initial position and a stable switch position,
the toggle switch being formed by the cooperation
- of the displaceable magnet (26) with
- at least a second annular magnet (29) which is arranged in the interior of the tube (6) coaxially with the magnet (26) and fixedly on the light guide (2) so that the magnet (26) which bears displaceably against the tube (6) placed over the light guide (2) can be slipped over the fixed magnet (29) and in this position forms the initial position which is stable as a result of a metastable force equilibrium,
the magnets (26) and (29) being polarised in such a manner that repulsion prevails between the fixed magnet (29) and the magnet (26) displaced in the direction of the magnetically activated switch (27) and the displaced magnet (26) assumes a stable switch position.

9. Light guide according to claim 8, **characterised in that** the stable switch position of the displaceable magnet (26) is formed by the stop ring (31).

10. Light guide according to claim 7, **characterised in that** a spiral spring (24) and a knife-shaped stop ring (25) fixed to the tube (6) are arranged in the interior of the sleeve (10) in order to produce the restoring force, the spiral spring (24) being situated on one side of the stop ring (25) and the magnet (26) on the other side.

11. Light guide according to claim 7, **characterised in that**, in order to produce the restoring force, at least one second annular magnet (29) is fixedly arranged on the light guide (2) in the interior of the tube (6) coaxially with the magnet (26) and is polarised in such a manner that attraction prevails between it and the magnet (26) displaced in the direction of the magnetically activated switch (27).

12. Light guide according to claim 11, **characterised in that** at least one of the magnets (26, 29) is a permanent magnet and the other magnet is optionally made from a magnetisable material.

13. Light guide according to claim 11, **characterised in that** the displaceable magnet and the fixed magnet (26, 29) are axially polarised permanent magnets, the axes of polarisation of which point in the same direction.

14. Light guide according to claim 11, **characterised in that** either the fixed magnet (29) or the displaceable magnet (26) is a radially polarised permanent magnet.

15. Light guide according to claim 11, **characterised in that** both magnets (26, 29) are radially polarised permanent magnets.

16. Light guide according to claim 11, **characterised in that** the displaceable magnet (26) is a radially polarised permanent magnet and the fixed magnet (29) is an axially polarised permanent magnet.

17. Light guide according to one of claims 1 to 6, **characterised by** an arrangement of three coaxial annular magnets which form a magnetic toggle switch with a stable initial position and a stable switch position, in which
(a) the arrangement includes two terminal magnets (26a, 26b; 29a, 29b) connected together and a central magnet (29; 26),
(b) the central magnet (29; 26) and the terminal magnets (26a, 26b; 29a, 29b) can be slipped over one another in such a manner that the central magnet (29; 26) is arranged between the terminal magnets (26a, 26b; 29a, 29b) and the magnet arrangement in this position forms the initial position which is stable as a result of a metastable force equilibrium, and
(c) in order to produce the stable switch position of the switch, the magnets are movable in such a manner that either
(c1) the central magnet (29) is fixed and the terminal magnets (26a, 26b) are displaceable relative thereto, to such an extent that they are positioned in a stable manner between the magnetically activated switch (27) and the central magnet (29), or
(c2) the terminal magnets (29a, 29b) are fixed and the central magnet (26) is displaceable relative thereto, to such an extent that it is positioned in a stable manner between the magnetically activated switch (27) and one of the terminal magnets (29b), wherein either
(c3) the terminal magnets (26a, 26b) are axially displaceable on the tube (6), while the central magnet (29) is fixedly arranged on the light guide (2), or
(c4) the central magnet (26) is axially displaceable on the tube (6), while the terminal magnets (29a, 29b) are fixedly arranged on the light guide (2),
the displaceable magnet(s) (26; 26a, 26b) optionally being arranged in the displaceable sleeve (10).

18. Light guide according to claim 17, **characterised in that** the stable switch position of the displaceable magnet(s) (26; 26a, 26b) is formed by the stop ring (31).

19. Light guide according to one of claims 8 to 18, **characterised in that** another annular magnet (8) is fixedly arranged on the light guide (2) coaxially with the annular magnets (26, 29; 26a, 26b, 29; 26, 29a, 29b), serves to mechanically secure an applicator part (7b) and is positioned at the light exit end of the light guide (2), the magnets (29; 29a, 29b) and (8) being axially polarised, like magnetic poles of these magnets (29; 29a, 29b) and (8) being situated directly opposite one another and the magnets (26, 29; 26a, 26b, 29; 26, 29a, 29b) and (8) being permanent magnets.

20. Light guide according to one of the preceding claims, **characterised by** at least two magnetically activated switches (27) connected in series.

21. Light guide according to one of the preceding claims, **characterised in that** the magnetically activated switch or switches (27) is/are reed switches or Hall-effect switches.

22. Light guide according to one of claims 6 to 21, **characterised in that** the sleeve (10) is provided at the light exit end with a rotationally symmetrical recessed finger grip (28) and is optionally provided on its surface with circumferential ribbing (28a).

23. Light guide according to one of the preceding claims, **characterised in that** the magnets (8, 26, 29) used are optionally ring structures made from a plurality of discrete sectors of magnetic material arranged in a circle, the magnetic material being a permanent magnet or a magnetisable material, or ring structures made from magnetic foils bent in a ring.

## Revendications

1. Guide optique (2) pour un dispositif d'éclairage optique, présentant un tube (6) disposé à son extrémité de sortie de lumière,
**caractérisé en ce que**
le tube (6) est constitué d'un matériau non magnétique,
le guide optique (2) présentant un commutateur manuel pour commander le flux de rayonnement du dispositif d'éclairage optique, qui est formé par
- au moins un commutateur à commande magnétique (27) disposé entre le guide optique (2) et le tube (6), qui est monté fermement sur l'enveloppe extérieure du guide optique (2) et est écarté de la surface intérieure du tube (6), et
- au moins un aimant annulaire (26) disposé sur le tube (6), qui est appliqué étroitement sur le tube (6) et est capable de coulisser axialement dessus, d'une position initiale vers une position de commutation dans laquelle le, commutateur à commande magnétique (27) est actionné,
- deux torons ou fils fins (41, 42) qui s'étendent vers l'extrémité d'entrée de lumière, partant du commutateur à commande magnétique (27).

2. Guide optique selon la revendication 1, **caractérisé en ce que** le tube (6) est librement mobile en rotation.

3. Guide optique selon la revendication 1 ou 2, **caractérisé en ce que** le guide optique est un guide optique à liquide, qui est constitué d'un tube en un carbone/fluoro-polymère et est rempli d'un liquide et présente une gaine de protection extérieure, les torons ou fils (41, 42) s'étendant entre le tube rempli de liquide et la gaine de protection extérieure, vers l'extrémité d'entrée de lumière.

4. Guide optique selon l'une des revendications précédentes, **caractérisé en ce que** le tube (6) présente une limitation mécanique (31) fixée dessus, qui limite la capacité de translation de l'aimant (26) dans la direction axiale du tube (6).

5. Guide optique selon l'une des revendications précédentes, **caractérisé en ce que** la limitation mécanique est un anneau d'arrêt (31) limitant la capacité de translation de l'aimant (26) dans la direction du commutateur à commande magnétique (27).

6. Guide optique selon la revendication 5, **caractérisé en ce que** l'aimant coulissant (26) est disposé à l'intérieur d'une douille (10) entourant le tube (6), coulissant axialement dessus.

7. Guide optique selon l'une des revendications précédentes, **caractérisé par** un élément pour créer une force de rappel pour l'aimant (26).

8. Guide optique selon l'une des revendications 1 à 6, **caractérisé en ce que**,
- le commutateur manuel est un interrupteur magnétique à bascule, avec lequel l'aimant coulissant (26) a une position initiale stable et une position de commutation stable,
l'interrupteur à bascule étant formé par la coopération
- de l'aimant coulissant (26) avec
- au moins un second aimant annulaire (29), qui est disposé à l'intérieur du tube (6) coaxialement à l'aimant (26) et fermement sur le guide optique (2) de telle façon que l'aimant (26), qui repose de manière coulissante sur le tube (6) placé sur le guide optique (2), est capable de coulisser sur l'aimant fixe (29) et constitue dans cette position la position initiale stable d'un équilibre de forces métastable,
- les aimants (26) et (29) étant polarisés de manière telle, que l'aimant fixe (29) et l'aimant (26) avancé dans la direction du commutateur à commande magnétique (27) se repoussent et que l'aimant (26) déplacé adopte une position de commutation stable.

9. Guide optique selon la revendication 8, **caractérisé en ce que** la position de commutation stable de l' aimant coulissant (26) est formée par l'anneau d'arrêt (31).

10. Guide optique selon la revendication 7, **caractérisé en ce que** pour produire la force de rappel, un ressort hélicoïdal (24) et un anneau d'arrêt (25) en forme de lame fixé sur le tube (6) sont disposés à l'intérieur de la douille (10), le ressort hélicoïdal (24) se situant d'un côté et l'aimant (26) de l'autre côté de l'anneau d'arrêt (25).

11. Guide optique selon la revendication 7, **caractérisé en ce que** pour produire la force de rappel, est disposé à l'intérieur du tube (6) coaxialement à l'aimant (26), de manière fixe sur le guide optique (2) au moins un deuxième aimant annulaire (29) polarisé de manière telle, que ce deuxième aimant (29) et l'aimant (26) déplacé dans la direction du commutateur à commande magnétique (27) s'attirent.

12. Guide optique selon la revendication 11, **caractérisé en ce qu'**au moins l'un des aimants (26, 29) est un aimant permanent et l'autre aimant est réalisé au choix dans un matériau magnétisable.

13. Guide optique selon la revendication 11, **caractérisé en ce que** l'aimant coulissant et fixe (26, 29) sont des aimants permanents polarisés axialement, dont les axes de polarisation sont orientés dans la même direction.

14. Guide optique selon la revendication 11, **caractérisé en ce que** soit l'aimant fixe (29) soit l' aimant coulissant (26) est un aimant permanent polarisé radialement.

15. Guide optique selon la revendication 11, **caractérisé en ce que** les deux aimants (26, 29) sont des aimants permanents polarisés radialement.

16. Guide optique selon la revendication 11, **caractérisé en ce que** l'aimant coulissant (26) est un aimant permanent polarisé radialement et l'aimant fixe (29) un aimant permanent polarisé axialement.

17. Guide optique selon l'une des revendications 1 à 6, **caractérisé par** un agencement de trois aimants annulaires coaxiaux les uns aux autres, qui forment un interrupteur magnétique à bascule avec une position initiale stable et une position de commutation stable, dans lequel
(a) l'agencement comprend deux aimants d'extrémité (26a, 26b ; 29a, 29b) reliés l'un à l' autre et un aimant médian (29 ; 26),
(b) l'aimant médian (29 ; 26) et les aimants d'extrémité (26a, 26b ; 29a, 29b) peuvent coulisser les uns sur les autres de telle façon que l'aimant médian (29 ; 26) est disposé entre les aimants d'extrémité (26a, 26b ; 29a, 29b) et l'agencement d'aimants dans cette position forme la position initiale stable sur la base d'un équilibre de forces métastable, et
(c) pour produire la position de commutation stable du commutateur, les aimants sont mobiles de telle façon que soit
(c1) l'aimant médian (29) est fixe et les aimants d'extrémité (26a, 26b ; 29a, 29b) sont coulissants par rapport à celui-ci et sur une distance telle qu'ils sont positionnés de manière stable entre le commutateur à commande magnétique (27) et l'aimant médian (29), soit
(c2) les aimants d'extrémité (29a, 29b) sont fixes et l'aimant médian (26) coulissant par rapport à ceux-ci et sur une distance telle qu'il est positionné de manière stable entre le commutateur à commande magnétique (27) et l'un des aimants médians (29b), sachant que soit
(c3) les aimants d'extrémité (26a, 26b) sont coulissants axialement sur le tube (6), l'aimant médian (29) étant toutefois disposé fixe sur le guide optique (2), soit
(c4) l' aimant médian (26) est coulissant axialement sur le tube (6), les aimants d'extrémité (29a, 29b) étant toutefois disposés fixes sur le guide optique (2),
le(s) aimant(s) coulissant(s) (26 ; 26a, 26b) étant disposé(s) au choix dans la douille coulissante (10).

18. Guide optique selon la revendication 17, **caractérisé en ce que** la position de commutation stable de l'aimant / des aimants (26 ; 26a, 26b) est formée par l'anneau d'arrêt (31).

19. Guide optique selon l'une des revendications 8 à 18, **caractérisé en ce qu'**un autre aimant annulaire (8) est prévu fermement sur le guide optique (2), coaxialement aux aimants annulaires (26, 29 ; 26a, 26b, 29 ; 26, 29a, 29b), qui sert de sûreté mécanique à une partie formant applicateur (7b) et est positionné à la sortie de lumière du guide optique (2), les aimants (29 ; 29a, 29b) et (8) étant polarisés axialement et les pôles magnétiques de même nom de ces aimants (29 ; 29a, 29b) et (8) se faisant directement face et les aimants (26, 29 ; 26a, 26b, 29 ; 26, 29a, 29b) et (8) étant des aimants permanents.

20. Guide optique selon l'une des revendications précédentes, **caractérisé par** au moins deux commutateurs à commande magnétique (27) montés en série.

21. Guide optique selon l'une des revendications précédentes, **caractérisé en ce que** le(s) commutateur(s) à commande magnétique (27) est/sont des commutateurs Reed ou des commutateurs Hall.

22. Guide optique selon l'une des revendications 6 à 21, **caractérisé en ce que** la douille (10) présente du côté sortie de la lumière une cuvette de prise digitale (28) à symétrie de révolution et au choix des stries (28a) circulaires à sa surface.

23. Guide optique selon l'une des revendications précédentes, **caractérisé en ce que** les aimants (8, 26, 29) employés sont au choix dés structures annulaires, qui sont constituées de plusieurs secteurs discrets en matériau magnétique et disposés en forme de cercle, le matériau magnétique étant un aimant permanent ou un matériau magnétisable,
ou des structures annulaires, qui sont constituées de feuilles magnétiques cintrées en forme d'anneau.
